# EUROPEAN PATENT APPLICATION

(11) **EP 4 369 804 A1**
(43) Date of publication of application: **15.05.2024**
(21) Application number: 22851862.7
(22) Date of filing: 18.07.2022
(51) Int. Cl.: H04W 56/00

(54) **UPLINK SIGNAL SYNCHRONIZATION METHOD AND COMMUNICATION APPARATUS**

(30) Priority: 05.08.2021 CN 202110897533
(71) Applicant: Huawei Technologies Co., Ltd., Longgang Shenzhen, Guangdong 518129 (CN)
(72) Inventor: CHEN, Ying, Shenzhen, Guangdong 518129 (CN); QIAO, Yunfei, Shenzhen, Guangdong 518129 (CN); WANG, Jun, Shenzhen, Guangdong 518129 (CN); SONG, Xinghua, Shenzhen, Guangdong 518129 (CN)
(74) Representative: Thun, Clemens
(86) International application number: PCT/CN2022/106164
(87) International publication number: WO 2023/011148

(57) **Abstract**

This application provides an uplink signal synchronization method and a communication apparatus. A terminal device receives first indication information, where the first indication information indicates first duration, the first duration is validity duration of synchronization information, and the synchronization information is used for uplink signal synchronization. The terminal device performs the uplink signal synchronization based on second indication information within the first duration that is after reception of the second indication information, where the uplink signal synchronization includes time domain offset compensation and/or frequency domain offset compensation, and the second indication information indicates the synchronization information. This can improve communication reliability.

## Description

This application claims priority to Chinese Patent Application No. 202110897533.4, filed with China National Intellectual Property Administration on August 5, 2021 and entitled "UPLINK SIGNAL SYNCHRONIZATION METHOD AND COMMUNICATION APPARATUS", which is incorporated herein by reference in its entirety.

### TECHNICAL FIELD

This application relates to the communications field, and in particular, to an uplink signal synchronization method and a communication apparatus.

### BACKGROUND

Compared with terrestrial communication, satellite communication features wide coverage. The satellite communication is introduced into a 5^{th} generation (5^{th} generation, 5G) mobile communication system, to provide communication services for oceans, forests, and some other areas. In addition, satellites, which acting as base stations, are less vulnerable to natural disasters or external damages. Therefore, the satellites are highly reliable to ensure communication in case of natural disasters.

However, different from ground base stations, satellites move at a high speed relative to the ground. Currently, a manner of uplink signal synchronization between a terminal device and a ground base station cannot be applied to the terminal device and a satellite base station. Therefore, how to maintain uplink signal synchronization between the terminal device and the satellite base station to ensure communication reliability is a problem to be resolved currently.

### SUMMARY

This application provides an uplink signal synchronization method and a communication apparatus, to improve communication reliability.

According to a first aspect, an uplink signal synchronization method is provided. The method may be performed by a terminal device or a module (for example, a chip) configured for (or used in) the terminal device.

The method includes: The terminal device receives first indication information, where the first indication information indicates first duration, the first duration is validity duration of synchronization information, and the synchronization information is used for uplink signal synchronization. The terminal device performs the uplink signal synchronization based on second indication information within the first duration that is after reception of the second indication information, where the uplink signal synchronization includes time domain offset compensation and/or frequency domain offset compensation, and the second indication information indicates the synchronization information.

According to the foregoing solution, the terminal device obtains the validity duration of the synchronization information, considers that the synchronization information is valid within the validity duration of the synchronization information, and performs the uplink signal synchronization based on the synchronization information. This can reduce cases in which the terminal device is unaware of out-of-synchronization due to expiration of the synchronization information, reduce a waste of communication resources in the out-of-synchronization case, and reduce power consumption caused by frequently obtaining the synchronization information by the terminal device.

With reference to the first aspect, in some implementations of the first aspect, the synchronization information includes one or more of the following information:
time domain offset compensation information between a serving satellite of the terminal device and a reference point, change information of the time domain offset compensation information, ephemeris information of the serving satellite of the terminal device, positioning information, frequency domain offset compensation information, location information of the reference point, or location information or timing information of a network device.

With reference to the first aspect, in some implementations of the first aspect, the method further includes: The terminal device sends third indication information, where the third indication information indicates one or more of the following information: movement speed information of the terminal device, ephemeris derivation capability information of the terminal device, or second duration. The ephemeris derivation capability information includes maximum duration of ephemeris derivation and/or an ephemeris derivation model, the ephemeris derivation model is used to determine the maximum duration of the ephemeris derivation performed by the terminal device, and the second duration is the validity duration of the synchronization information determined by the terminal device.

According to the foregoing solution, the terminal device provides speed information and/or capability information of the terminal device to the network device via the third indication information, so that the network device can determine the validity duration of the synchronization information based on the information provided by the terminal device, to improve accuracy of determining the validity duration of the synchronization information.

With reference to the first aspect, in some implementations of the first aspect, the third indication information is carried in a message 3 of a random access procedure.

With reference to the first aspect, in some implementations of the first aspect, the method further includes:

After the first duration that elapses after reception of the second indication information, the terminal device receives fourth indication information on a first resource, where the fourth indication information is used to update the synchronization information, and the first resource is used to carry the fourth indication information.

According to the foregoing solution, after the first duration that elapses after reception of the second indication information, the terminal device receives the updated synchronization information, so that the terminal device can obtain the updated synchronization information in a timely manner, to maintain the uplink signal synchronization.

With reference to the first aspect, in some implementations of the first aspect, the terminal device is in a network-connected state, and the method further includes: The terminal device enters an idle state if receiving no fourth indication information on the first resource. The terminal device receives a system message, where the system message includes the synchronization information.

According to the foregoing solution, for the terminal device in the connected state that cannot obtain a system message, a network notifies the terminal device of an updated system message via the fourth indication information, so that the terminal device can maintain the connected state, to maintain data communication with the network. If the terminal device receives no fourth indication information, the terminal device may enter the idle state to obtain the system message including the synchronization information, so that the terminal device can obtain the synchronization information in a timely manner, to reduce cases of uplink out-of-synchronization.

With reference to the first aspect, in some implementations of the first aspect, the method further includes: If receiving no fourth indication information on the first resource, the terminal device sends feedback information, where the feedback information indicates that the fourth indication information fails to be received. That the terminal device enters the idle state includes: The terminal device enters the idle state after sending the feedback information.

According to the foregoing solution, if receiving no fourth indication information, the terminal device may send the feedback information to, notify the network that the fourth indication information fails to be received. The network may determine, based on predefined information, that the terminal device enters the idle state when the fourth indication information fails to be received, and cannot receive or send communication data. The network may not send downlink data to the terminal device or schedule the terminal device to send uplink data, to reduce a resource waste.

With reference to the first aspect, in some implementations of the first aspect, that the terminal device enters the idle state includes: The terminal device determines that a quantity of transmissions of the fourth indication information is greater than or equal to a maximum quantity of transmissions and that the fourth indication information fails to be received; and the terminal device enters the idle state.

According to the foregoing solution, the network may send the fourth indication information to the terminal device for a plurality of times, to increase a probability that the terminal device receives the fourth indication information. When the fourth indication information reaches the maximum quantity of transmissions, the terminal device enters the idle state.

With reference to the first aspect, in some implementations of the first aspect, that the terminal device enters the idle state includes: determining that uplink signal out-of-synchronization or a wireless link failure occurs; and entering the idle state.

With reference to the first aspect, in some implementations of the first aspect, the method further includes: The terminal device initiates the random access procedure if receiving no fourth indication information on the first resource.

According to the foregoing solution, when the terminal device receives no fourth indication information, the terminal device may initiate the random access procedure to obtain uplink synchronization information.

With reference to the first aspect, in some implementations of the first aspect, the terminal device is in a network-connected state, and that the terminal device initiates the random access procedure includes: The terminal device initiates a contention-based random access procedure after entering the idle state.

With reference to the first aspect, in some implementations of the first aspect, the method further includes: If receiving no fourth indication information on the first resource, the terminal device sends feedback information, where the feedback information indicates that the fourth indication information fails to be received, and the random access procedure is initiated after the feedback information is sent.

According to the foregoing solution, if receiving no fourth indication information, the terminal device may send the feedback information, to notify the network that the fourth indication information fails to be received. The network may determine, based on predefined information, that the terminal device performs the random access procedure when the terminal device receives no fourth indication information. In this way, the network device and the terminal device reach a consensus, to avoid an unnecessary resource waste.

With reference to the first aspect, in some implementations of the first aspect, that the terminal device initiates the random access procedure includes: The terminal device receives fifth indication information, where the fifth indication information indicates the terminal device to initiate a non-contention-based random access procedure. The terminal device initiates the non-contention-based random access procedure based on the fifth indication information.

With reference to the first aspect, in some implementations of the first aspect, that the terminal device initiates the random access procedure includes: The terminal device initiates the random access procedure when a quantity of retransmissions of the fourth indication information is greater than or equal to a maximum quantity of retransmissions.

With reference to the first aspect, in some implementations of the first aspect, that the terminal device initiates the random access procedure includes: determining that uplink signal out-of-synchronization or a wireless link failure occurs, and initiating the random access procedure.

According to the foregoing solution, when the terminal device receives no fourth indication information, it may be considered that the uplink signal out-of-synchronization or the wireless link failure occurs, so that the terminal device may initiate the random access procedure to obtain the synchronization information.

With reference to the first aspect, in some implementations of the first aspect, the method further includes: If the terminal device receives the fourth indication information, the terminal device performs the uplink signal synchronization based on the fourth indication information within the first duration that is after reception of the fourth indication information.

With reference to the first aspect, in some implementations of the first aspect, the synchronization information includes one or more of the following: the time domain offset compensation information between the reference point and the serving satellite, the change information of the time domain offset compensation information, or the ephemeris information of the serving satellite. The method further includes: The terminal device receives sixth indication information, where the sixth indication information indicates third duration, and the third duration is validity duration of location information of the terminal device. After the third duration that elapses after the location information is updated, the terminal device receives the positioning information. If receiving, after the third duration, no positioning information on a resource for carrying the positioning information, the terminal device initiates the random access procedure.

With reference to the first aspect, in some implementations of the first aspect, the synchronization information includes the time domain offset compensation information between the reference point and the serving satellite and/or the change information of the time domain offset compensation information. The method further includes: The terminal device receives seventh indication information, where the seventh indication information indicates fourth duration, and the fourth duration is validity duration of the ephemeris information of the serving satellite. The terminal device receives the updated ephemeris information after receiving the fourth duration of the ephemeris information. If receiving, after the fourth duration, no updated ephemeris information on a resource for carrying the updated ephemeris information, the terminal device initiates the random access procedure.

According to the foregoing solution, the network device may separately configure a piece of validity duration for the terminal device for different types of synchronization information, and the terminal device obtains corresponding update information based on the validity duration of each type of synchronization information. It can be avoided that because the validity duration of the synchronization information is different, the terminal device frequently obtains other types of synchronization information that are valid because one type of synchronization information is invalid.

According to a second aspect, an uplink signal synchronization method is provided. The method may be performed by a network device or a module (for example, a chip) configured for (or used in) the network device.

The method includes: The network device sends first indication information to a first terminal device, where the first indication information indicates first duration, the first duration is validity duration of synchronization information, and the synchronization information is used for uplink signal synchronization. The network device sends second indication information to the first terminal device, where the second indication information indicates the synchronization information.

With reference to the second aspect, in some implementations of the second aspect, the method further includes: The synchronization information includes one or more of the following information:
time domain offset compensation information between a serving satellite and a reference point, change information of the time domain offset compensation information, ephemeris information of a serving satellite of the terminal device, positioning information, frequency domain offset compensation information, location information of the reference point, or location information or timing information of the network device.

With reference to the second aspect, in some implementations of the second aspect, the method further includes: The network device determines that the validity duration of the synchronization information is the first duration based on a location relationship between the serving satellite and the reference point and/or a location relationship between the serving satellite and the network device.

With reference to the second aspect, in some implementations of the second aspect, the method further includes: The network device determines the first duration based on ephemeris derivation capability information of the first terminal device and/or movement speed information of the first terminal device. Alternatively, the network device determines the first duration based on a minimum ephemeris derivation capability of the terminal device and/or maximum movement speed information of the terminal device. The ephemeris derivation capability information includes maximum duration of ephemeris derivation and/or an ephemeris derivation model, and the ephemeris derivation model is used to determine the maximum duration of the ephemeris derivation performed by the terminal device.

With reference to the second aspect, in some implementations of the second aspect, the method further includes: The network device receives third indication information from the first terminal device, where the third indication information indicates one or more of the following information: the movement speed information of the terminal device, the ephemeris derivation capability information of the terminal device, or second duration. The ephemeris derivation capability information includes the maximum duration of the ephemeris derivation and/or the ephemeris derivation model, the ephemeris derivation model is used to determine the maximum duration of the ephemeris derivation performed by the terminal device, and the second duration is the validity duration of the synchronization information determined by the terminal device.

With reference to the second aspect, in some implementations of the second aspect, the fourth indication information is carried in a message 3 of a random access procedure.

With reference to the second aspect, in some implementations of the second aspect, the method further includes: The network device sends fourth indication information after the first duration, where the fourth indication information is used to update the synchronization information.

With reference to the second aspect, in some implementations of the second aspect, the method further includes: The network device determines, based on the first duration, a cycle of a discontinuous reception operation of the first terminal device and/or activation time of the discontinuous reception operation. The network device sends configuration information to the first terminal device, where the configuration information is used to configure the discontinuous reception operation, and the configuration information includes indication information indicating the cycle and/or the activation time.

With reference to the second aspect, in some implementations of the second aspect, the discontinuous reception operation is a discontinuous reception operation performed when the terminal device is in a connected state.

With reference to the second aspect, in some implementations of the second aspect, the synchronization information includes one or more of the following: the time domain offset compensation information between the serving satellite and the reference point, the change information of the time domain offset compensation information, and the ephemeris information of the serving satellite. The method further includes: The network device sends sixth indication information to the first terminal device, where the sixth indication information indicates third duration, and the second duration is validity duration of location information of the first terminal device.

With reference to the second aspect, in some implementations of the second aspect, the method further includes: The network device determines the third duration based on a movement speed of the first terminal device or a maximum movement speed of the terminal device.

With reference to the second aspect, in some implementations of the second aspect, the synchronization information includes the time domain offset compensation information between the reference point and the serving satellite and/or the change information of the time domain offset compensation information. The method further includes: The network device sends seventh indication information to the first terminal device, where the seventh indication information indicates fourth duration, and the fourth duration is validity duration of the ephemeris information of the serving satellite.

According to a third aspect, an uplink signal synchronization method is provided. The method may be performed by a terminal device or a module (for example, a chip) configured for (or used in) the terminal device.

The method includes: The terminal device receives configuration information from a network device, where the configuration information is used to configure a first resource, the first resource is used to receive synchronization information, and the synchronization information is used to perform uplink signal synchronization. The terminal device receives the synchronization information on the first resource.

According to the foregoing solution, the first terminal device may request the synchronization information or obtain the synchronization information on a semi-persistent resource based on a demand. This can avoid uplink out-of-synchronization because the terminal device cannot obtain the synchronization information, and improve communication reliability.

With reference to the third aspect, in some implementations of the third aspect, the synchronization information includes one or more of the following information:
time domain offset compensation information between a serving satellite of the terminal device and a reference point, change information of the time domain offset compensation information, ephemeris information of the serving satellite of the terminal device, positioning information, frequency domain offset compensation information, or location information or timing information of the reference point.

With reference to the third aspect, in some implementations of the third aspect, the method further includes: The terminal device sends request information to the network device, where the request information is used to request the synchronization information.

With reference to the third aspect, in some implementations of the third aspect, the first resource is a periodic resource or the semi-persistent resource.

With reference to the third aspect, in some implementations of the third aspect, a plurality of resources used to carry the synchronization information is configured in the configuration information. The plurality of resources have different cycles and/or different frequency domain resources, and the plurality of resources include the first resource. That the terminal device receives the synchronization information on the first resource includes: The terminal device receives first indication information, where the first indication information is used to activate the first resource in the plurality of resources; and the terminal device receives the first indication information on the first resource.

With reference to the third aspect, in some implementations of the third aspect, the method further includes: The terminal device sends second indication information, where the second indication information indicates movement speed information of the terminal device and/or ephemeris derivation capability information of the terminal device. The ephemeris derivation capability information includes maximum duration of ephemeris derivation and/or an ephemeris derivation model, and the ephemeris derivation model is used to determine the maximum duration of the ephemeris derivation performed by the terminal device.

According to a fourth aspect, an uplink signal synchronization method is provided. The method may be performed by a network device or a module (for example, a chip) configured for (or used in) the network device.

The method includes: The network sends configuration information to a first terminal device, where the configuration information is used to configure a first resource, and the first resource is used to carry synchronization information, and sends the synchronization information to the first terminal device on the first resource.

With reference to the fourth aspect, in some implementations of the fourth aspect, the synchronization information includes one or more of the following information:
time domain offset compensation information between a serving satellite and a reference point, change information of the time domain offset compensation information, ephemeris information of the serving satellite of the terminal device, positioning information, frequency domain offset compensation information, or location information or timing information of the reference point.

With reference to the fourth aspect, in some implementations of the fourth aspect, the method further includes: The network device receives request information from the first terminal device, where the request information is used to request the synchronization information.

With reference to the fourth aspect, in some implementations of the fourth aspect, the first resource is a periodic resource or a semi-persistent resource.

With reference to the fourth aspect, in some implementations of the fourth aspect, a plurality of resources used to carry the synchronization information is configured in the configuration information, and the plurality of resources have different cycles and/or different frequency domain resources. That the network device sends the synchronization information to the first terminal device on the first resource includes: The network device sends first indication information to the terminal device, where the first indication information is used to activate the first resource in the plurality of resources, and sends the synchronization information to the first terminal device on the first resource.

With reference to the fourth aspect, in some implementations of the fourth aspect, the method further includes: The network device determines a cycle of the first resource based on a location relationship between the serving satellite and the reference point and/or a location relationship between the serving satellite and the network device.

With reference to the fourth aspect, in some implementations of the fourth aspect, the synchronization information includes ephemeris information of the serving satellite. The method further includes: The network device determines the cycle of the first resource based on ephemeris derivation capability information of the first terminal device and/or movement speed information of the first terminal device, or determines the cycle of the first resource based on a minimum ephemeris derivation capability of the terminal device and/or maximum movement speed information of the terminal device.

With reference to the fourth aspect, in some implementations of the fourth aspect, the method further includes: The network device receives second indication information from the first terminal device, where the second indication information indicates the movement speed information of the first terminal device and/or the ephemeris derivation capability information of the first terminal device. The ephemeris derivation capability information includes maximum duration of the ephemeris derivation and/or an ephemeris derivation model, and the ephemeris derivation model is used to determine the maximum duration of the ephemeris derivation performed by the terminal device.

According to a fifth aspect, a communication apparatus is provided. The apparatus may include a one-to-one corresponding module for performing the method/operation/step/action described in the first aspect and any one of the implementations of the first aspect. The module may be a hardware circuit, or may be software, or may be implemented by a hardware circuit in combination with software. In a design, the apparatus includes: a transceiver unit, configured to receive first indication information, where the first indication information indicates first duration, the first duration is validity duration of synchronization information, and the synchronization information is used for uplink signal synchronization; and a processing unit, configured to perform the uplink signal synchronization based on second indication information within the first duration that is after reception of the second indication information, where the uplink signal synchronization includes time domain offset compensation and/or frequency domain offset compensation, and the second indication information indicates the synchronization information.

According to a sixth aspect, a communication apparatus is provided. The apparatus may include a one-to-one corresponding module for performing the method/operation/step/action described in the second aspect and any one of the implementations of the second aspect. The module may be a hardware circuit, or may be software, or may be implemented by a hardware circuit in combination with software. In a design, the apparatus includes: a processing unit, configured to determine first duration, where the first duration is validity duration of synchronization information, and the synchronization information is used for uplink signal synchronization; and a transceiver unit, configured to send first indication information to a first terminal device, where the first indication information indicates the first duration. The transceiver unit is further configured to send second indication information to the first terminal device, where the second indication information indicates the synchronization information used for the uplink signal synchronization, and the uplink signal synchronization includes time domain offset compensation and/or frequency domain offset compensation.

According to a seventh aspect, a communication apparatus is provided. The apparatus may include a one-to-one corresponding module for performing the method/operation/step/action described in the third aspect and any one of the implementations of the third aspect. The module may be a hardware circuit, or may be software, or may be implemented by a hardware circuit in combination with software. In a design, the apparatus includes: a transceiver unit, configured to receive configuration information from a network device, where the configuration information is used to configure a first resource, the first resource is used to receive synchronization information, and the synchronization information is used to perform uplink signal synchronization; and a processing unit, configured to determine the first resource based on the configuration information. The transceiver unit is further configured to receive the synchronization information on the first resource.

According to an eighth aspect, a communication apparatus is provided. The apparatus may include a one-to-one corresponding module for performing the method/operation/step/action described in the fourth aspect and any one of the implementations of the fourth aspect. The module may be a hardware circuit, or may be software, or may be implemented by a hardware circuit in combination with software. In a design, the apparatus includes: a processing unit, configured to determine a first resource, where the first resource is used to carry synchronization information; and a transceiver unit, configured to send configuration information to a first terminal device, where the configuration information is used to configure the first resource. The transceiver unit is further configured to send the synchronization information to the first terminal device on the first resource.

According to a ninth aspect, a communication apparatus is provided, and includes a processor. The processor may implement the method according to any one of the first aspect, the third aspect, and the possible implementations of the first aspect or the third aspect. Optionally, the communication apparatus further includes a memory. The processor is coupled to the memory, and may be configured to execute instructions in the memory, to implement the method according to any one of the first aspect, the third aspect, and the possible implementations of the first aspect or the third aspect.

Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface, and the processor may be a logic circuit.

Optionally, the transceiver may be a transceiver circuit. Optionally, the input/output interface may be an input/output circuit.

According to a tenth aspect, a communication apparatus is provided, and includes a processor. The processor may implement the method according to any one of the second aspect, the fourth aspect, or the possible implementations of the second aspect or the fourth aspect. Optionally, the communication apparatus further includes a memory. The processor is coupled to the memory, and may be configured to execute instructions in the memory, to implement the method according to any one of the second aspect, the fourth aspect, or the possible implementations of the second aspect or the fourth aspect.

Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be an input/output interface, and the processor may be a logic circuit.

Optionally, the transceiver may be a transceiver circuit. Optionally, the input/output interface may be an input/output circuit.

According to an eleventh aspect, a processor is provided, and includes: an input circuit, an output circuit, and a processing circuit. The processing circuit is configured to receive a signal through the input circuit, and transmit a signal through the output circuit, to enable the processor to perform the method according to any one of the first aspect to the fourth aspect or the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and the various circuits are not limited in embodiments of this application.

According to a twelfth aspect, a computer program product is provided. The computer program product includes a computer program (which may alternatively be referred to as code or instructions). When the computer program is run on a computer, the computer is enabled to perform the method according to any one of the first aspect to the fourth aspect or the possible implementations of the first aspect to the fourth aspect.

According to a thirteenth aspect, a computer-readable storage medium is provided. The computer-readable storage medium stores a computer program (which may alternatively be referred to as code or instructions). When the computer program is run on a computer, the computer is enabled to perform the method according to any one of the first aspect to the fourth aspect or the possible implementations of the first aspect to the fourth aspect.

According to a fourteenth aspect, a communication system is provided, and includes the foregoing at least one network device and the foregoing at least one terminal device.

### BRIEF DESCRIPTION OF DRAWINGS

FIG. 1 is a schematic architectural diagram of a communication network applicable to an embodiment of this application;
FIG. 2 is a schematic architectural diagram of a communication network applicable to an embodiment of this application;
FIG. 3 is a schematic flowchart of an uplink synchronization method according to an embodiment of this application;
FIG. 4 is a schematic diagram of an uplink synchronization method according to an embodiment of this application;
FIG. 5 is another schematic diagram of an uplink synchronization method according to an embodiment of this application;
FIG. 6 is another schematic diagram of an uplink synchronization method according to an embodiment of this application;
FIG. 7 is a schematic flowchart of an uplink synchronization method according to an embodiment of this application;
FIG. 8 is a schematic block diagram of a communication apparatus according to an embodiment of this application;
FIG. 9 is a schematic structural diagram of a terminal device according to an embodiment of this application; and
FIG. 10 is a schematic structural diagram of a network device according to an embodiment of this application.

### DESCRIPTION OF EMBODIMENTS

The following describes technical solutions of this application with reference to accompanying drawings.

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In the specification, the claims, and the accompanying drawings of embodiments of this application, the terms "first", "second", and the like are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system or new radio (new radio, NR), a non-terrestrial network (non-terrestrial network, NTN), and a future communication system, such as a sixth generation mobile communication system. This is not limited in this application.

In the NTN, a satellite can implement transparent payload (transparent payload) transmission or regenerative payload (regenerative payload) transmission.

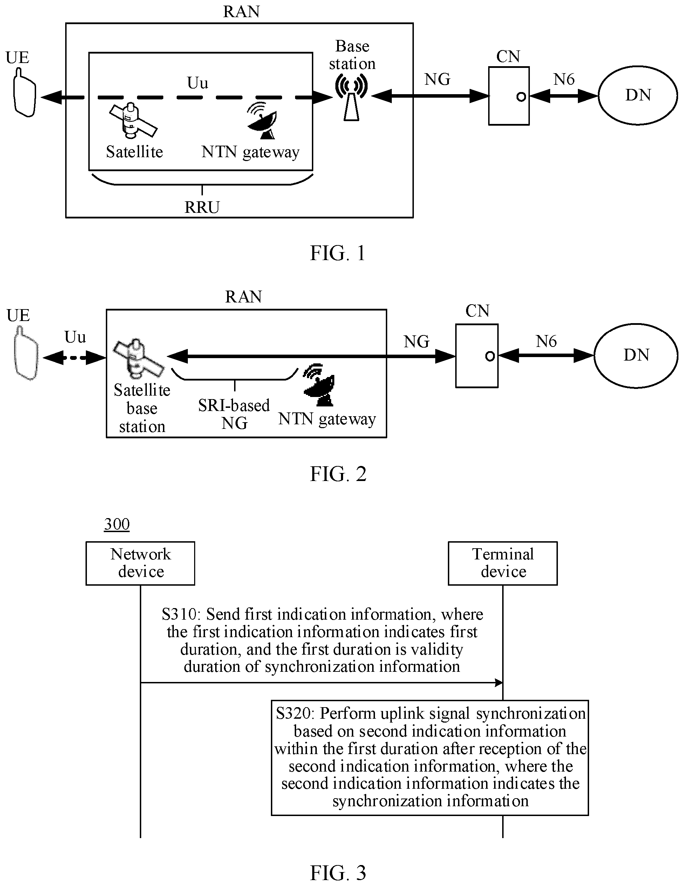

FIG. 1 is a schematic architectural diagram of an NTN applicable to an embodiment of this application. As shown in FIG. 1, user equipment (user equipment, UE) communicates with a ground base station through a universal terrestrial radio access network-user (universal terrestrial radio access network-user, Uu) interface. The satellite may implement transparent payload transmission between a user and the ground base station. The satellite and an NTN gateway may be considered as a remote radio unit (remote radio unit) of the ground base station, and implement functions such as radio frequency filtering, frequency conversion and amplification on a signal, with a signal waveform unchanged. Satellite forwarding is transparent to a terminal device.

FIG. 2 is another schematic architectural diagram of an NTN applicable to an embodiment of this application. As shown in FIG. 2, a satellite may implement non-transparent payload transmission (or referred to as regenerative payload transmission). The satellite has some or all functions of a base station, may be referred to as a satellite base station, and implements functions such as radio frequency filtering, frequency conversion and amplification, demodulation/decoding, switching or routing, and coding/modulation. The satellite base station communicates with the UE through the Uu interface.

The following describes network elements and corresponding interfaces between the network elements in FIG. 1 and FIG. 2.

UE: The UE may alternatively be a terminal device, and may access a network through an air interface and initiate services such as calling, and Internet access.

Base station: The base station may be the ground base station shown in FIG. 1, or may be the satellite base station shown in FIG. 2. The base station may provide a wireless access service, schedule a wireless resource for an access terminal, and provide a reliable wireless transmission protocol, a reliable data encryption protocol, and the like.

Core network (core network, CN): The core network is used for services such as user access control, mobility management, session management, user security certification, and charging. The core network includes a plurality of functional network elements, and may be divided into a control-plane functional entity and a data-plane functional entity. The core network may be divided, based on functions, into a user plane function and a control plane function. The user plane function may include a user plane function (UPF) network element, and is mainly responsible for connecting to a data network (data network, DN) externally through an N6 interface, routing and forwarding a data packet on a user plane, filtering a packet, performing a quality of service (quality of service, QoS) control-related function, and the like. The control plane function may include an access and mobility management function (access and mobility management function, AMF) network element and a session management function (session management function, SMF) network element. The AMF network element is mainly responsible for user access management, security certification, mobility management, and the like. The SMF network element is mainly responsible for session management, terminal device address management and allocation, a dynamic host configuration protocol function, user plane function selection and control, and the like.

Next-generation network (next-generation, NG) interface: The next-generation interface is an interface between a base station and a core network, mainly used for exchanging signaling such as NAS of the core network and service data of a user.

Satellite radio interface (satellite radio interface, SRI): The satellite radio interface is a feeder link between an NTN gateway and a satellite. In FIG. 2, the SRI interface may be used as a part of an NG interface for communication interaction between the satellite and a core network.

Xn interface: A network may include a plurality of base stations, and the base stations communicate with each other through the Xn interface. The Xn interface is mainly used for signaling interaction and user data transmission between the base stations in a process such as terminal device handover.

The terminal device in embodiments of this application may alternatively be referred to as user equipment (user equipment, UE), an access terminal, a user unit, a user station, a mobile station, a remote station, a remote terminal, a mobile device, a user terminal, a terminal, a wireless communication device, a user agent, or a user apparatus. The terminal device in embodiments of this application may be a mobile phone, a tablet computer, a computer with a wireless transceiver function, a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in transportation security, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device, a computing device, a vehicle-mounted device, a wearable device, a terminal device in a 5G network, a terminal device in a future evolved public land mobile communication network (public land mobile network, PLMN) that have a wireless communication function, or the like. It should be understood that a specific form of the terminal device is not limited in this application.

Alternatively, the terminal device may be a terminal device in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. IoT technologies can implement massive connections, intensive coverage, and power saving for terminals by using, for example, a narrow band (narrow band, NB) technology.

A network device in embodiments of this application may be a device that has a wireless transceiver function in an access network. The device includes but is not limited to: a base station, a satellite, a satellite base station, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP). Alternatively, the device may be a network node that forms a gNB or a transmission point, for example, a baseband unit (BBU) or a distributed unit (distributed unit, DU). It should be understood that a specific form of the network device is not limited in this application.

Different from terrestrial communication, for signal transmission between a satellite base station and a terminal device, a difference between a round-trip transmission delay and a round-trip delay (round-trip delay, RTD) is much greater than a difference between a round-trip transmission delay and a round-trip delay in terrestrial communication. For example, when a cell diameter in a terrestrial cellular network is 350 kilometers (kilometer, km), a maximum round-trip delay in a cell is 1.17 milliseconds (millisecond, ms). Round-trip transmission time of a highorbit satellite is up to hundreds of milliseconds, and round-trip transmission delay of a low-orbit satellite is up to dozens of milliseconds.

To implement uplink synchronization, in the terrestrial communication, the terminal device performs timing advance (timing advance, TA) based on an indication of a network side. A timing advance volume is related to the round-trip transmission delay. In satellite communication, the terminal device may determine an RTD between the terminal device and the satellite base station based on ephemeris information of the satellite base station and a GNSS signal provided by a navigation satellite in a global navigation satellite system (global navigation satellite system, GNSS). For example, the terminal device obtains a location of the satellite base station based on the ephemeris information, and derives a change of the location of the satellite base station. The terminal device determines location information of the terminal device based on the GNSS signal, to calculate a length of a communication link between the satellite base station and the terminal device, and determines, based on the length of the communication link, the RTD for signal transmission between the satellite base station and the terminal device. In addition, for a transparent transmission satellite base station, the terminal device may perform uplink signal synchronization via information provided by the ground base station, and the ground base station may provide common TA information for the terminal device. The common TA information is an RTD between a reference point and the satellite. The reference point may be a satellite, a ground base station, or another point on a communication link. The terminal device may determine the TA between the terminal device and the satellite base station based on the RTD between the terminal device and the ground base station and the common TA information. The ground base station may broadcast the common TA information and the ephemeris information of the satellite base station via a system message.

If a parameter used by the terminal device to perform the uplink signal synchronization is not updated in a timely manner, uplink out-of-synchronization occurs. However, some types of terminal devices may not continuously monitor the system message based on different states. For example, a terminal device in the internet of things does not monitor the system message when the terminal device is in a connected state. Therefore, the terminal device may cause uplink out-of-synchronization because the ephemeris information and/or the common TA information obtained last time expire. In addition, the terminal device may derive a parameter change within specific time based on an obtained uplink synchronization related parameter. An update cycle of the system message is less than derivation time of the terminal device, so that the terminal device is triggered to unnecessarily monitor the system message within a derivation capability range, and consequently increases power consumption. In particular, a lowpower consumption terminal device may not meet a power consumption requirement. This application provides a closed-loop update mechanism for synchronization information used for synchronization. A terminal device obtains validity duration of the synchronization information, considers that the synchronization information is valid within the validity duration of the synchronization information, and performs uplink signal synchronization based on the synchronization information. This can reduce cases in which the terminal device is unaware of out-of-synchronization due to expiration of the synchronization information, reduce a waste of communication resources in the out-of-synchronization case, and reduce power consumption caused by frequently obtaining the synchronization information by the terminal device.

The following describes an uplink signal synchronization method provided in embodiments of this application with reference to the accompanying drawings.

### Embodiment 1

FIG. 3 is a schematic flowchart of an uplink synchronization method 300 according to an embodiment of this application.

S310: A network device sends first indication information to a first terminal device, where the first indication information indicates first duration, and the first duration is validity duration of synchronization information.

Correspondingly, the first terminal device receives the first indication information from the network device.

The network device may be a terrestrial access network device (for example, a ground base station connected to the first terminal device) or a satellite access network device.

For example, the first terminal device establishes a communication connection to the ground base station, and a satellite base station provides a transparent transmission communication service. The ground base station may send the first indication information to the network device, to notify the validity duration of the synchronization information.

For another example, the first terminal device establishes a communication connection to the satellite base station, and the satellite base station notifies the first terminal device of the validity duration of the synchronization information via the first indication information.

The synchronization information is used for uplink signal synchronization. That the first terminal device performs the uplink signal synchronization includes performing time domain offset compensation and/or frequency domain offset compensation on an uplink signal. The synchronization information may include one or more of the following information:
time domain offset compensation information between a serving satellite of the first terminal device and a reference point, change information of the time domain offset compensation information, ephemeris information of the serving satellite of the first terminal device, positioning information, frequency domain offset compensation information, location information of the reference point, or location information or timing information of the network device.

The time domain offset compensation information may be common TA information, and the change information of the time domain offset compensation information may be used by the first terminal device to derive a change of the time domain offset compensation information to update the time domain offset compensation information. The change information of the time domain offset compensation information may be a change rate of the time domain offset compensation information, that is, a first-order derivative, or a higher-order derivative.

The positioning information may include time window information for receiving a GNSS signal by the terminal device, and/or auxiliary positioning information that is provided by the network device for assisting the terminal device in obtaining location information.

The location information of the network device may be location information of the network device that sends the first indication information to the first terminal device, or location information of an access network device that establishes a wireless communication connection to the first terminal device. The network device may be a ground base station or a satellite base station.

The timing information may include parameter information used to improve timing accuracy. The first terminal device can improve the timing accuracy based on the timing information, to improve accuracy of the uplink signal synchronization.

Before sending the first indication information to the first terminal device, the network device needs to determine, based on a related parameter, the validity duration of the synchronization information, that is, the first duration.

Optionally, the network device may determine the first duration based on a location relationship between the serving satellite and the reference point and/or a location relationship between the serving satellite and the network device.

For example, the synchronization information includes the time domain offset compensation information between the serving satellite and the reference point. The network device may determine a change rate of the common TA information based on the location relationship between the serving satellite and the reference point and/or the location relationship between the serving satellite and the network device, and determine the validity duration of the synchronization information based on the change rate of the common TA information.

Optionally, the network device may determine the first duration based on ephemeris derivation capability information of the terminal device and/or movement speed information of the terminal device.

By way of example rather than limitation, the ephemeris derivation capability information may include maximum duration of ephemeris derivation and/or an ephemeris derivation model, and the ephemeris derivation model is used to determine the maximum duration of the ephemeris derivation performed by the terminal device.

In an implementation, the network device determines the first duration based on the ephemeris derivation capability information of the first terminal device and/or the movement speed information of the first terminal device.

Optionally, the first terminal device sends third indication information to the network device, where the third indication information indicates one or more of the following information:
the ephemeris derivation capability information of the first terminal device, the movement speed information of the first terminal device, or second duration.

Correspondingly, the network device receives the third indication information from the first terminal device. The second duration is the validity duration of the synchronization information recommended by the terminal device.

For example, the synchronization information may include the ephemeris information of the serving satellite. After obtaining the ephemeris derivation capability information of the first terminal device via the third indication information, the network device may determine maximum duration of the ephemeris derivation performed by the first terminal device, and may determine the validity duration of the synchronization information based on the maximum duration.

Optionally, the maximum duration of the ephemeris derivation performed by the terminal device may be corresponding to a plurality of capability levels. Each capability level is corresponding to one piece of maximum duration of the ephemeris derivation, and the third indication information specifically indicates a capability level. The network device may determine that the maximum duration of the ephemeris derivation performed by the first terminal device is duration corresponding to the capability level indicated by the third indication information.

For example, a correspondence relationship between the maximum duration of the ephemeris derivation performed by the terminal device and the capability level may be shown in Table 1. If the maximum duration of the ephemeris derivation performed by the first terminal device is 10s, the terminal device may send the third indication information to the network device via a message 3 (message 3, Msg3) in a random access procedure. The third indication information may indicate a capability level 1 corresponding to 10s. After receiving the third indication information sent by the first terminal device, the network device determines, based on the capability level 1 indicated by the third indication information, that the maximum duration of the ephemeris derivation performed by the first terminal device is 10s. Alternatively, if the maximum duration of the ephemeris derivation performed by the first terminal device is 20s, the third indication information sent by the first terminal device and received by the network device indicates that an ephemeris derivation capability information level is 3, and the network device determines that the maximum duration of the ephemeris derivation performed by the first terminal device is 20s.

**Table 1**

| Ephemeris derivation capability information level | Maximum duration of ephemeris derivation |
|---|---|
| 0 | 5s |
| 1 | 10s |
| 2 | 15s |
| 3 | 20s |
| 4 | 25s |
| ... | ... |

For another example, a validity period of a location of the terminal device is related to a movement speed of the terminal device. The network device may obtain the movement speed information of the first terminal device via the third indication information, and determine validity duration of the location information of the terminal device based on the movement speed information, so that the terminal device may determine to perform the uplink signal synchronization within the validity duration based on the location information, and update the location information in a timely manner after the validity duration.

For another example, the first terminal device may determine the validity duration of the synchronization information, that is, the second duration, based on a capability of deriving the synchronization information by the first terminal device, for example, the ephemeris derivation capability information, and reports, to the network device via the third indication information, the validity duration of the synchronization information recommended by the first terminal device. After receiving the third indication information, the network device may determine the first duration based on the second duration recommended by the first terminal device. The first duration may be the same as the second duration, or the network device determines, based on another parameter, that the second duration is unsuitable, and the first duration may be different from the second duration. The another parameter may be the location relationship between the serving satellite and the reference point, the location relationship between the serving satellite and the network device, or the like. However, this application is not limited thereto.

Optionally, the third indication information may be carried in information that is sent by the first terminal device to the network device and that is in the random access procedure. By way of example rather than limitation, the third indication information may be carried in the message 3 in the random access procedure.

In another implementation, the network device determines the first duration based on a minimum ephemeris derivation capability of the terminal device and/or maximum movement speed information of the terminal device.

The minimum ephemeris derivation capability of the terminal device may be a derivation capability of a low-capability terminal device.

The network device may determine the first duration based on the derivation capability of the low-capability terminal device and/or the maximum movement speed of the terminal device. The first duration may be considered as validity duration of synchronization information applicable to all terminal devices. Optionally, the first indication information may be broadcast information. A terminal device connected to the network device may receive the broadcast information, and determine the validity duration of the synchronization information.

S320: The first terminal device performs the uplink signal synchronization based on second indication information within the first duration that is after reception of the second indication information, where the second indication information indicates the synchronization information.

The uplink signal synchronization includes the time domain offset compensation and/or the frequency domain offset compensation.

Optionally, the second indication information may be carried in a system message.

After receiving the first indication information, the first terminal device determines that the validity duration of the synchronization information is the first duration. After receiving the second indication information indicating the synchronization information, the first terminal device performs the uplink signal synchronization within the first duration based on the synchronization information indicated by the second indication information.

According to the foregoing solution, it is considered that the synchronization information is valid within the validity duration of the synchronization information, and the uplink signal synchronization is performed based on the synchronization information. This can reduce power consumption caused by frequently obtaining the synchronization information by the terminal device, reduce cases in which the terminal device is unaware of out-of-synchronization due to expiration of the synchronization information, and reduce a waste of communication resources in the out-of-synchronization case.

After the first duration that elapses after the reception of the second indication information, the first terminal device receives fourth indication information on a first resource, where the fourth indication information is used to update the synchronization information.

After the first duration, the first terminal device may determine that the synchronization information indicated by the second indication information may be invalid, and receive the fourth indication information, to obtain updated synchronization information. The fourth indication information may indicate the updated synchronization information, or the fourth indication information indicates parameter information used to update a calculation manner of the synchronization information, so that the terminal device updates the calculation manner based on the parameter information, and determines the updated synchronization information based on the updated calculation manner. However, this application is not limited thereto.

In an implementation, the fourth indication information may be carried in the system message.

In other words, the first terminal device may stop receiving the system message within the first duration that is after the reception of the second indication information, and obtain, after the first duration, the updated synchronization information by receiving the system message.

In another implementation, the fourth indication information may be dedicated information that is sent by the network device to the first terminal device and that is used to update the synchronization information.

For example, the first terminal device is a terminal device in IoT, and the terminal device in the IoT can receive the system message only in a radio resource control (radio resource control, RRC) idle state to obtain the synchronization information. The first terminal device needs to enter an RRC connected state to send an uplink signal. Within the first duration that is after obtaining of the synchronization information by the first terminal device, the first terminal device performs the uplink signal synchronization based on the synchronization information. After the first duration that is after obtaining the synchronization information by the first terminal device, if the first terminal device is still in the connected state, the first terminal device cannot receive the system message. The network device may send the fourth indication information to the first terminal device when the first terminal device is in the connected state, and the first terminal device receives the fourth indication information, to obtain the updated synchronization information. Therefore, the first terminal device may obtain the synchronization information via the system message without switching to the idle state.

Optionally, the first resource for carrying the fourth indication information may be preconfigured by a network for the first terminal device. Alternatively, the network device may periodically send the fourth indication information, where the fourth indication information in each cycle indicates latest synchronization information. The first terminal device does not receive the fourth indication information within the first duration that is after the reception of the second indication information, but receives the fourth indication information in a following cycle of the fourth indication information that is after the first duration, to obtain the updated synchronization information.

Optionally, the cycle of the fourth indication information may be determined based on one or more of the following: the first duration, the ephemeris derivation capability of the first terminal device, the maximum movement speed of the first terminal device, the minimum ephemeris derivation capability of the terminal device, the maximum movement speed of the terminal device, a satellite orbit height of the serving satellite, or a cell elevation angle of the serving satellite.

Optionally, it may be specified that when the terminal device is in the connected state, the terminal device may obtain the system message related to the synchronization information, and the system message includes the fourth indication information.

For example, it may be specified that the terminal device in the IoT may obtain the system message related to the synchronization information when the terminal device is in the connected state. In this case, after the first duration that elapses after reception of the second indication information, the terminal device in the IoT receives the system message related to the synchronization information in the connected state. The system message includes the fourth indication information.

If the first terminal device receives the fourth indication information on the first resource, the first terminal device performs the uplink signal synchronization based on the fourth indication information within the first duration that is after the reception of the fourth indication information.

In an implementation, if the first terminal device receives no fourth indication information on the first resource, the first terminal device may enter the idle state, and receive the system message in the idle state.

The following describes an optional implementation in which the first terminal device enters the idle state when the first terminal device receives no fourth indication information on the first resource.

Optionally, the first terminal device is in a network-connected state. If the first terminal device receives no fourth indication information on the first resource, the first terminal device enters the idle state, and receives the system message in the idle state, where the system message includes the synchronization information.

In this embodiment of this application, that the terminal device receives no piece of information may be considered as that the terminal device does not detect the information, or may be considered as that the terminal device detects the information but fails to read content of the information because decoding fails.

For example, the first terminal device cannot receive the system message in the connected state, and the network device sends, to the terminal device in the connected state, the fourth indication information used to update the synchronization information. If the terminal device receives no fourth indication information on the first resource, the terminal device may enter the idle state, and receive the system message in the idle state, to obtain the updated synchronization information.

Optionally, if the first terminal device receives no fourth indication information on the first resource, the first terminal device may determine that uplink out-of-synchronization or a wireless link failure occurs, enter the idle state, and receive the system message in the idle state, where the system message includes the synchronization information.

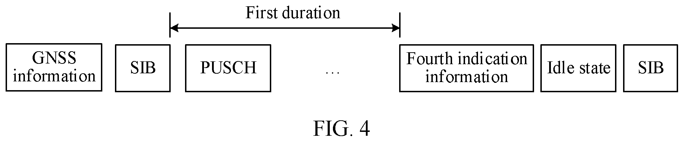

For example, the synchronization information indicated by the second indication information includes one or more of the following information: the common TA information, change information of the common TA information, or the ephemeris information of the serving satellite. As shown in FIG. 4, the first terminal device may receive the second indication information via a system information block (system information block, SIB). Before receiving the second indication information via the system information block, the first terminal device further receives GNSS information, where the GNSS information includes positioning information. Within the first duration that is after the reception of the SIB, the first terminal device performs the uplink signal synchronization based on the synchronization information in the SIB and the positioning information and sends uplink data on a physical uplink shared channel (physical uplink shared channel, PUSCH). After the first duration that is after the reception of the SIB, the first terminal device receives the fourth indication information. If receiving no fourth indication information, the first terminal device determines that the uplink out-of-synchronization or the wireless link failure occurs, and enters the idle state to receive the system information to obtain the synchronization information.

If the first terminal device receives no fourth indication information on the first resource, the first terminal device may determine that the uplink out-of-synchronization or the wireless link failure occurs, so that the first terminal device is triggered to enter the idle state to receive the system message, to obtain the synchronization information. However, this application is not limited thereto.

Optionally, if the first terminal device receives no fourth indication information on the first resource, the first terminal device sends feedback information, where the feedback information indicates that the fourth indication information fails to be received.

The first terminal device may notify, via the feedback information, the network device that the first terminal device receives no fourth indication information.

Optionally, after sending the feedback information, the first terminal device enters the idle state, and receives the system message in the idle state, where the system message includes the synchronization information.

The network device receives the feedback information from the first terminal device, and may determine, based on the feedback information, that the first terminal device receives no fourth indication information and enters the idle state.

For example, after receiving the feedback information from the first terminal device, the network device determines that the first terminal device enters the idle state, and the network device may not schedule an uplink signal (for example, uplink information and/or uplink data) sent by the first terminal device or not send a downlink signal (for example, downlink information and/or downlink data) to the first terminal device. However, this application is not limited thereto.

Optionally, if the first terminal device receives no fourth indication information, the first terminal device may determine that the uplink out-of-synchronization or the wireless link failure occurs, and enter the idle state.

Optionally, if a quantity of transmissions of the fourth indication information is greater than or equal to a maximum quantity of transmissions, the first terminal device enters the idle state, and receives the system message in the idle state, where the system message includes the synchronization information.

The network device sends the fourth indication information to the first terminal device for a plurality of times. When the first terminal device determines that the quantity of transmissions of the fourth indication information is greater than or equal to the maximum quantity of transmissions, and the first terminal device receives no fourth indication information, the first terminal device enters the idle state to receive the system message.

Optionally, the maximum quantity of transmissions of the fourth indication information may be preconfigured.

In an example, the network device preconfigures a plurality of resources used to receive the fourth indication information, and the network device sends the fourth indication information on the plurality of resources. Correspondingly, the first terminal device receives the fourth indication information on the plurality of resources. If receiving no fourth indication information on the plurality of resources, the first terminal device determines that the quantity of transmissions of the fourth indication information reaches the maximum quantity, and enters the idle state to receive the system message. Optionally, the first terminal device sends the feedback information to the network device before entering the idle state.

For example, the network device periodically sends the fourth indication information, where the fourth indication information in each cycle indicates latest synchronization information, and the plurality of resources are resources used to carry the fourth indication information in a plurality of cycles. The first terminal device receives the fourth indication information within a next cycle that is after the first duration, where the first duration is after the reception of the second indication information. If receiving no fourth indication information, the first terminal device receives the fourth indication information in a cycle following the next cycle. If the first terminal device does not successfully receive the fourth indication information in a maximum quantity of cycles preconfigured by the network device, the first terminal device enters the idle state to receive the system message.

In another example, when the first terminal device receives no fourth indication information on the first resource, the first terminal device sends the feedback information to the network device. After receiving the feedback information, the network device resends the fourth indication information to the first terminal device, until the first terminal device determines that the quantity of transmissions of the fourth indication information reaches the maximum quantity, and the first terminal device enters the idle state to receive the system message. In this example, the maximum quantity of transmissions may be referred to as a maximum quantity of retransmissions. However, if the first terminal device receives the fourth indication information by one retransmission operation, the first terminal device performs the uplink signal synchronization based on the fourth indication information within the first duration that is after the reception of the retransmitted fourth feedback information.

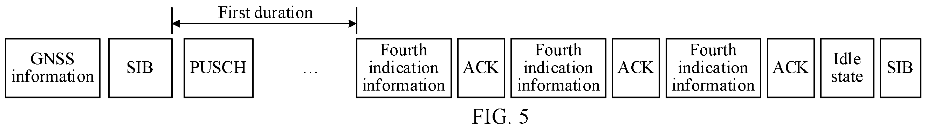

For example, as shown in FIG. 5, within the first duration that is after the reception of the SIB, the first terminal device performs the uplink signal synchronization based on the synchronization information in the SIB and the positioning information included in the GNSS information, and sends the uplink data on the PUSCH. After the first duration that elapses after the reception of the SIB, the first terminal device receives the fourth indication information. If receiving no fourth indication information (for example, the fourth indication information is detected but is unsuccessfully decoded), the first terminal device sends the feedback information, and receives information about retransmitting the fourth indication information. If still receiving no retransmitted fourth indication information, the first terminal device sends the feedback information again, and receives the retransmitted fourth indication information again. If still receiving no retransmitted fourth indication information, for example, the maximum quantity of retransmissions of the fourth indication information is three, the first terminal device determines that the quantity of transmissions of the fourth indication information reaches the maximum quantity of transmissions, and the first terminal device may enter the idle state after sending the feedback information again, to receive the SIB.

According to the foregoing solution, when the terminal device obtains no fourth indication information used to update the synchronization information, the terminal device may enter the idle state to receive the system message, to obtain the uplink synchronization information. This reduces a case in which the uplink out-of-synchronization occurs on the terminal device.

Optionally, if the quantity of transmissions of the fourth indication information is greater than or equal to the maximum quantity of transmissions, the first terminal device determines that the uplink out-of-synchronization or the wireless link failure occurs, and enters the idle state to receive the system message.

In another implementation, if the first terminal device receives no fourth indication information on the first resource, the first terminal device may initiate the random access procedure.

The following describes an optional implementation in which the first terminal device initiates the random access procedure when the first terminal device receives no fourth indication information on the first resource.

Optionally, if the first terminal device receives no fourth indication information on the first resource, the first terminal device initiates the random access procedure.

For example, if the first terminal device receives no fourth indication information on the first resource, the first terminal device may consider that the uplink out-of-synchronization occurs, and initiate the random access procedure, to obtain the uplink synchronization information.

Optionally, if the first terminal device receives no fourth indication information on the first resource, the first terminal device sends feedback information, where the feedback information indicates that the fourth indication information fails to be received.

In an example, when the first terminal device receives no fourth indication information on the first resource, the first terminal device initiates the random access procedure after sending the feedback information, so that after receiving the feedback information, the network device determines that the first terminal device receives no fourth indication information, and the first terminal device is to initiate the random access procedure.

In another example, when the first terminal device receives no fourth indication information on the first resource, after the first terminal device sends the feedback information, the network device receives the feedback information and determines that the first terminal device receives no fourth indication information. In this case, the network device sends fifth indication information to the first terminal device, where the fifth indication information indicates the first terminal device to initiate a non-contention-based random access procedure. After receiving the fifth indication information, the first terminal device initiates the non-contention-based random access procedure based on the fifth indication information.

That the first terminal device initiates the non-contention-based random access procedure means that the first terminal device sends a random access signal to the network device on a dedicated random access resource that is preconfigured by the network to the first terminal device.

In another example, when the first terminal device receives no fourth indication information, the first terminal device sends the feedback information, and initiates a contention-based random access procedure. Optionally, the first terminal device enters the idle state after sending the feedback information, and initiates the contention-based random access procedure in the idle state.

That the first terminal device initiates the non-contention-based random access procedure means that the first terminal device selects a random access resource from a common random access resource set preconfigured by the network to send a random access signal to the network. If the resource is not simultaneously selected by another terminal device to send a random access signal, it may be considered that the first terminal device successfully obtains the random access resource through contention. If the resource is simultaneously selected by another terminal device to send a random access signal, it is considered that a contention of the random access resource occurs on the first terminal device. A contention resolution may be performed.

Optionally, the first terminal device initiates the random access procedure when the quantity of retransmissions of the fourth indication information is greater than or equal to the maximum quantity of retransmissions.

Optionally, when the first terminal device receives no fourth indication information, or when the first terminal device receives no fourth indication information and the quantity of retransmissions of the fourth indication information is greater than or equal to the maximum quantity of retransmissions, it may be considered that the uplink out-of-synchronization or the wireless link failure occurs, and the first terminal device may initiate the random access procedure to obtain the uplink synchronization information. Optionally, the first terminal device may enter the idle state to initiate the random access procedure.

For example, the first terminal device is the terminal device in the IoT, and the terminal device in the IoT does not monitor the system message after random access. If the fourth indication information fails to be received within the first duration that is after the reception of the second indication information, when the quantity of retransmissions of the fourth indication information is greater than or equal to the maximum quantity of retransmissions, and the fourth indication information is still not decoded, the first terminal device considers that the uplink out-of-synchronization occurs, and enters the idle state to initiate the random access procedure.

According to the foregoing solution, when the terminal device obtains no fourth indication information used to update the synchronization information, the terminal device may perform the random access procedure, to obtain the uplink synchronization information through the random access procedure.

Optionally, the first duration may be maximum duration of a timer corresponding to the synchronization information. After obtaining the first duration via the first indication information, the first terminal device sets the maximum duration of the timer to the first duration, starts the timer after receiving the second indication information, and performs the uplink signal synchronization based on the second indication information during running of the timer. After the timer stops timing, the first terminal device receives the fourth indication information on the first resource to obtain the updated synchronization information. If the first terminal device receives the fourth indication information, the first terminal device restarts the timer and performs the uplink signal synchronization based on the fourth indication information during running of the timer.

Optionally, the network device may determine a cycle and/or activation time of discontinuous reception (discontinuous reception, DRX) of the first terminal device based on the first duration. A DRX operation may be used to reduce power consumption of the terminal device. The first terminal device periodically performs the DRX operation. A period of time at which each cycle starts is the activation time of the DRX. The first terminal device monitors control information in the activation time of each cycle, and does not monitor the control information beyond the activation time, to reduce power consumption. The network device sends discontinuous reception configuration information to the first terminal device, where the configuration information includes indication information indicating the discontinuous reception cycle and/or the activation time. The first terminal device performs the discontinuous reception operation based on the configuration information. Optionally, the discontinuous reception operation is a connected mode discontinuous reception (connected mode DRX, CDRX) operation.

The network device determines the cycle and/or the activation time of the DRX based on the first duration, so that the first terminal device may receive the fourth indication information within the activation time of the DRX when the validity duration of the synchronization information expires, to update the synchronization information.

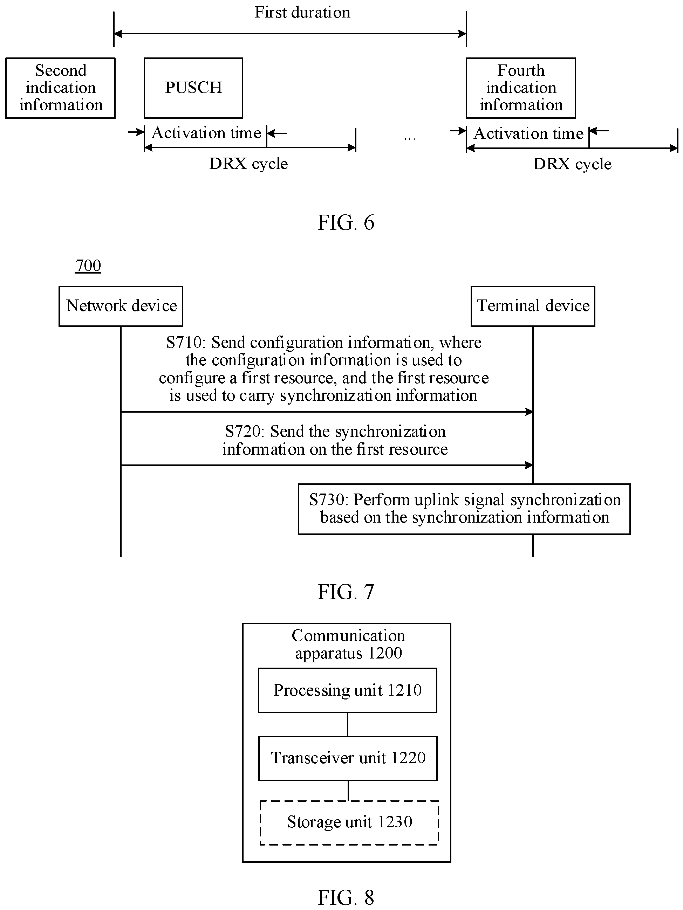

For example, as shown in FIG. 6, the first terminal device performs the uplink signal synchronization based on the second indication information within the first duration that elapses after the reception of the second indication information. Because the first terminal device performs a CDRX operation, the first terminal device sends uplink data on a PUSCH within activation time of the CDRX. A CDRX cycle configured by the network device for the first terminal device is determined based on the first duration. For example, the first duration may be an integer multiple of the CDRX cycle. In this way, the first terminal device may receive the fourth indication information within activation time in a CDRX cycle that is after the first duration. This can reduce cases in which the first terminal device cannot receive the fourth indication information because the first terminal device is not within the activation time of the CDRX.

### Embodiment 2

Embodiment 2 of this application provides that for different types of synchronization information, validity duration corresponding to different types of synchronization information may be respectively indicated. It should be noted that Embodiment 1 may be implemented in combination with Embodiment 2, and for a part in Embodiment 2 that is the same as or similar to a part in Embodiment 1, refer to the descriptions in Embodiment 1.

In an example, a network device may separately configure validity duration of first synchronization information as first duration and validity duration of second synchronization information as third duration for a first terminal device. The first synchronization information may include one or more of the following information: time domain offset compensation information between a reference point and a serving satellite, change information of the time domain offset compensation information, or ephemeris information of the serving satellite. The second synchronization information may include positioning information. For example, the positioning information may be time window information for receiving a GNSS signal or positioning assistance information for assisting the terminal device in determining a location of the terminal device, or the positioning information may be a GNSS signal from a navigation satellite. If the positioning information is the GNSS signal, the third duration may be a time window for receiving the GNSS signal by the terminal device.

For example, the first synchronization information includes common TA information and the ephemeris information, and the common TA information is the time domain offset compensation information between the reference point and the serving satellite and/or the change information of the time domain offset compensation information. The network device sends first indication information to the first terminal device, to notify the first terminal device that the validity duration of the first synchronization information is the first duration. The second synchronization information is the GNSS signal from the navigation satellite, and the network device further sends sixth indication information to the first terminal device, where the sixth indication information indicates that the validity duration of the second synchronization information is the third duration.

The first terminal device may start a first timer after receiving the first synchronization information, where maximum duration of the first timer is the first duration. During running of the first timer, the first terminal device determines the time domain offset compensation information between the reference point and the serving satellite based on the common TA information in the first synchronization information. In addition, the first terminal device determines a location of the serving satellite based on the ephemeris information in the first synchronization information. After the first timer stops timing, the first terminal device receives, from the network device, indication information used to update the first synchronization information.

In an implementation, the indication information used to update the first synchronization information may be carried in dedicated indication information that is sent by the network device to the terminal device and that is used to update the first synchronization information. For example, a network may preconfigure, for the first terminal device, a resource used to transmit the dedicated indication information, and the first terminal device receives the dedicated indication information on the resource.

If the first terminal device receives no indication information used to update the first synchronization information, or a quantity of transmissions of the indication information is greater than or equal to a maximum quantity of transmissions, the first terminal device enters an idle state to receive a system message to obtain the updated first synchronization information.

Alternatively, if the first terminal device receives no indication information used to update the first synchronization information, or a quantity of transmissions of the indication information is greater than or equal to a maximum quantity of transmissions, the first terminal device initiates a random access procedure. Optionally, when the first terminal device receives no indication information used to update the first synchronization information, or the quantity of transmissions of the indication information is greater than or equal to the maximum quantity of transmissions, the first terminal device determines that uplink out-of-synchronization or a wireless link failure occurs, and initiates the random access procedure to obtain the updated first synchronization information.

For example, if the first terminal device cannot receive the system message in a connected state, after the first timer stops timing, the network device sends, to the first terminal device, the indication information used to update the first synchronization information. If the first terminal device receives the indication information, the first terminal device starts the first timer, and determines the common TA information and the location of the serving satellite based on the updated first synchronization information during running of the first timer. If the first terminal device receives no indication information, or the quantity of transmissions of the indication information is greater than or equal to the maximum quantity of transmissions, and the first terminal device is still in the connected state, the first terminal device determines that the uplink out-of-synchronization or the wireless link failure occurs, enters the idle state, and initiates the random access procedure, to obtain the updated first synchronization information.

In another implementation, the indication information used to update the first synchronization information may be carried in the system message. Optionally, the system message may be a system message dedicated for satellite communication.

For example, it may be specified that the first terminal device in a connected state can receive the system message dedicated for satellite communication, where the system message includes the first synchronization information. After the first timer stops timing, the first terminal device receives the system message dedicated for satellite communication, and obtains updated first synchronization information.

The first terminal device may obtain the GNSS signal (that is, the second synchronization information) from the navigation satellite, determine location information of the terminal device based on the GNSS signal, and the terminal device starts a second timer, where maximum duration of the second timer is the third duration. The first terminal device performs uplink signal synchronization based on the obtained common TA information, the location of the serving satellite, and the location information of the first terminal device that is determined based on the GNSS signal.

After the second timer stops timing, the first terminal device receives the GNSS signal again, and determines the location information of the first terminal device. If the first terminal device receives the GNSS signal, the first terminal device starts the second timer. If obtaining no GNSS signal, the first terminal device initiates a random access procedure. Optionally, the first terminal device determines that uplink out-of-synchronization or a wireless link failure occurs, and initiates the random access procedure, to re-obtain synchronization with the network.

For example, the first terminal device may be a terminal device in IoT. The first terminal device performs data transmission for a long time, and the network device may indicate the third duration for the first terminal device. When the third duration expires, the first terminal device determines that the GNSS signal needs to be received, so that the first terminal device stops the data transmission, and receives the GNSS signal from the navigation satellite.

In other words, after separately receiving the first synchronization information and the second synchronization information, the first terminal device starts corresponding timers, and considers that the synchronization information is valid during running of the corresponding timers. When one of the timers stops timing, the first terminal device obtains update information of the corresponding synchronization information. If obtaining no first synchronization information, the first terminal device may receive the system message to obtain the updated first synchronization information, or consider that the uplink out-of-synchronization or the wireless link failure occurs, and initiate the random access procedure. If obtaining no second synchronization information, the first terminal device may consider that the uplink out-of-synchronization or the wireless link failure occurs, and initiate the random access procedure.

In another example, a network device may separately configure validity duration of common TA information, that is, first duration, and validity duration of ephemeris information of a serving satellite, that is, fourth duration, for a first terminal device.

For example, the network device sends first indication information to the first terminal device, where the first indication information indicates that the validity duration of the common TA information is the first duration. The network device sends seventh indication information to the first terminal device, where the seventh indication information indicates that the validity duration of the ephemeris information of the serving satellite is the fourth duration. The first terminal device may start a first timer after receiving the common TA information, and determine time domain offset compensation information between a reference point and the serving satellite based on the common TA information during running of the first timer. After the first timer stops timing, the first terminal device receives, from the network device, indication information that indicates updated common TA information. If the indication information is received, the first terminal device starts the first timer, and determines the time domain offset compensation information between the reference point and the serving satellite based on the updated common TA information during running of the first timer

Optionally, if the first terminal device in a connected state cannot receive a system message, the indication information indicating the updated common TA information may be dedicated indication information. Alternatively, it may be specified that the first terminal device in a connected state may receive a system message related to synchronization information. In this case, the indication information may be carried in the system message, and the system message may be a system message that is related to the synchronization information and that is used to carry the common TA information.

If the first terminal device receives no indication information, or a quantity of transmissions of the indication information is greater than or equal to a maximum quantity of transmissions, the first terminal device may enter an idle state from the connected state, and receive the system message to obtain the updated common TA information. Alternatively, if the first terminal device receives no indication information, or a quantity of transmissions of the indication information is greater than or equal to a maximum quantity of transmissions, the first terminal device may consider that uplink out-of-synchronization or a wireless link failure occurs, and initiate a random access procedure. The random access procedure may be a non-contention-based random access procedure triggered by the network device, or may be a contention-based random access procedure initiated by the terminal device when the terminal device enters the idle state.

A process of obtaining the ephemeris information by the first terminal device is similar to a process of obtaining the common TA information, that is, determining, based on the fourth duration, whether to obtain update information of the ephemeris information. For brevity, details are not described herein. In other words, the first terminal device separately maintains a piece of validity duration for the common TA information and the ephemeris information based on an indication of the network device, and receives corresponding update information when the validity duration of one piece of the information expires. If receiving no update information, the first terminal device enters the idle state to obtain the update information via the system message, or considers that the uplink out-of-synchronization or the wireless link failure occurs, and initiates the random access procedure. That the first terminal device receives no update information may be that the first terminal device receives no update information once, or that the update information is not successfully received even when a quantity of transmissions of the update information reaches a maximum quantity of transmissions.

In another example, a network device may separately configure a piece of validity duration for common TA information, ephemeris information of a serving satellite, and positioning information. For example, the validity duration of the common TA information is first duration, the validity duration of the positioning information is third duration, and the validity duration of the ephemeris information is fourth duration. A first terminal device obtains corresponding update information when the validity duration of one of the following expires: the common TA information, the ephemeris information of the serving satellite, and the positioning information. For each type of synchronization information, the implementation provided in Embodiment 1 may be used. For brevity, details are not described herein again.

According to the foregoing solution, the network device may separately configure a piece of validity duration for the terminal device for different types of synchronization information, and the terminal device obtains corresponding update information based on the validity duration of each type of synchronization information. It can be avoided that because the validity duration of the synchronization information is different, the terminal device frequently obtains other types of synchronization information that are valid because one type of synchronization information is invalid.

### Embodiment 3

A terminal device may determine, based on ephemeris derivation capability information and/or movement speed information of the terminal device, that validity duration of synchronization information is second duration. Optionally, the synchronization information may include one or more of the following information:
time domain offset compensation information between a serving satellite of the first terminal device and a reference point, change information of the time domain offset compensation information, ephemeris information of the serving satellite of the first terminal device, positioning information, frequency domain offset compensation information, or location information or timing information of the reference point.

In an implementation, the terminal device may receive first indication information from a network device, where the first indication information indicates that the validity duration of the synchronization information determined by the network device is first duration. After receiving second indication information, the terminal device receives time of the updated synchronization information based on the shorter one of the second duration and the first duration. The second indication information indicates the synchronization information.

For example, after receiving the first indication information, the terminal device compares the first duration with the second duration, determines the shorter one of the first duration and the second duration as actual validity duration of the synchronization information, and performs uplink signal synchronization based on the second indication information within the actual validity duration that is after the reception of the second indication information. After the actual validity duration that elapses after the reception of the second indication information, the first terminal device receives fourth indication information. Optionally, the network device may periodically send the fourth indication information. The first terminal device does not receive the fourth indication information within the actual validity duration that is after the reception of the second indication information, and receives the fourth indication information within a next cycle that is for sending the fourth indication information and that is after the actual validity duration.

For another example, after receiving the second indication information, the terminal device starts two timers, where duration of the two timers is the first duration and the second duration. After either of the two timers stops timing, the terminal device receives the fourth indication information.

According to the foregoing solution, the terminal device and the network device separately determine validity duration of one piece of synchronization information based on information obtained by the terminal device and the network device, and the terminal device determines, based on the shorter one of the two pieces of validity duration, the time of updating the synchronization information, so that the validity duration of the synchronization information is more accurate.

In another implementation, the terminal device may receive first indication information from the network device, where the first indication information indicates that validity duration of synchronization information determined by the network device is first duration. After receiving second indication information, the terminal device determines that a wireless link failure occurs after the shorter one of second duration and the first duration expires, and initiates a random access procedure to obtain uplink synchronization information.

In another implementation, the terminal device sends third indication information to the network device, where the third indication information indicates that the validity duration of the synchronization information determined by the terminal device is the second duration.

Optionally, the terminal device may receive trigger information from the network device, where the trigger information indicates that the second duration is used as the validity duration of the synchronization information. The terminal device performs uplink signal synchronization based on the second indication information within the second duration that is after reception of the second indication information, and receives the fourth indication information after the second duration.

Optionally, after preset duration that elapses after the sending of the third indication information, the terminal device may apply the second duration.

For example, the terminal device may consider that, after the preset duration that elapses after the terminal device sends the third indication information, the network device receives the third indication information, and both parties may reach a consensus on the second duration. Therefore, the terminal device applies the second duration after the preset duration that is after the sending of the third indication information. In other words, the second duration is used as the validity duration of the synchronization information. The terminal device performs the uplink signal synchronization based on the second indication information within the second duration that is after reception of the second indication information, and receives the fourth indication information after the second duration.

According to the foregoing solution, the terminal device may determine the validity duration of the synchronization information, and notify the network device. The network device may determine whether the validity duration is suitable. If the validity duration is suitable, the network device may trigger the terminal device via the trigger information to apply the validity duration of the synchronization information. The network device and the terminal device may reach a consensus on the validity duration.

It should be noted that Embodiment 3 is implemented in combination with some or all of the implementations in Embodiment 1 and Embodiment 2, and for a part in Embodiment 3 that is the same as or similar to a part in the foregoing embodiments, refer to the descriptions in the foregoing embodiments. For brevity, details are not described herein again.

### Embodiment 4

FIG. 7 is another schematic flowchart of an uplink signal synchronization method according to an embodiment of this application.

S710: A network device sends configuration information to a first terminal device, where the configuration information is used to configure a first resource, and the first resource is used to carry synchronization information.

Correspondingly, the first terminal device receives the configuration information from the network device, and determines, based on the configuration information, the first resource used to receive the synchronization information.

The synchronization information is used by the first terminal device to perform uplink signal synchronization, and the synchronization information may include but is not limited to one or more of the following information:
time domain offset compensation information between a serving satellite and a reference point, change information of the time domain offset compensation information, ephemeris information of the serving satellite of the terminal device, positioning information, frequency domain offset compensation information, or location information or timing information of the reference point.

Optionally, before S710, the first terminal device sends request information to the network device, where the request information is used to request the network device to send the synchronization information. The network device sends the configuration information to the first terminal device in response to the first terminal device.

In an implementation, the configuration information may be DCI. In other words, the network device dynamically schedules the first resource to send the synchronization information to the first terminal device. After receiving the configuration information, the first terminal device determines that the network device dynamically schedules the first resource for sending the synchronization information. Optionally, the first terminal device may send the request information to the network device based on a demand, and the network device sends the configuration information to the first terminal device in response to a request of the first terminal device.

In another implementation, the configuration information is an RRC message, and the first resource is a periodic resource or a semi-persistent resource. The network device configures the periodic or semi-persistent first resource for the first terminal device via the configuration information. The first terminal device may receive the synchronization information on the first resource, and perform the uplink signal synchronization. Optionally, the first terminal device may send, based on the demand, the request information to the network device if the first terminal device needs the network to provide the periodic or semi-persistent first resource, and the network device sends the configuration information to the first terminal device in response to the request of the first terminal device.

The semi-persistent resource is a resource that appears at a specific cycle after being activated.

Optionally, the first resource is a periodic resource or a semi-persistent resource, and the network device may determine a cycle of the first resource based on a location relationship between the serving satellite and the reference point and/or a location relationship between the serving satellite and the network device.

For example, the synchronization information includes the time domain offset compensation information between the serving satellite and the reference point. The network device may determine a change rate of common TA information based on the location relationship between the serving satellite and the reference point and/or the location relationship between the serving satellite and the network device, and determine the cycle of the first resource based on the change rate of the common TA information.

Optionally, the network device may determine the cycle of the first resource based on ephemeris derivation capability information of the terminal device and/or movement speed information of the terminal device.

By way of example rather than limitation, the ephemeris derivation capability information may include maximum duration of ephemeris derivation and/or an ephemeris derivation model, and the ephemeris derivation model is used to determine the maximum duration of the ephemeris derivation performed by the terminal device.

In an implementation, the network device determines the cycle of the first resource based on the ephemeris derivation capability information of the first terminal device and/or the movement speed information of the first terminal device.

Optionally, the first terminal device sends third indication information to the network device, where the third indication information indicates one or more of the following information:
the ephemeris derivation capability information of the first terminal device, the movement speed information of the first terminal device, or second duration.

Correspondingly, the network device receives the third indication information from the first terminal device. The second duration is validity duration of the synchronization information recommended by the terminal device.

S720: The network device sends the synchronization information to the first terminal device on the first resource.

Correspondingly, the first terminal device receives, on the first resource, the synchronization information from the network device.

S730: The terminal device performs the uplink signal synchronization based on the synchronization information.

Optionally, the first resource may be a semi-persistent resource. Before sending the synchronization information to the first terminal device on the first resource, the network device sends first indication information to the first terminal device, where the first indication information is used to activate the first resource. Correspondingly, after receiving the first indication information, the first terminal device determines that the first resource is activated. The network device sends the synchronization information on the first resource, and the first terminal device receives the synchronization information on the first resource.

Optionally, the configuration information may be used to configure a plurality of resources used to carry the synchronization information, where cycles and/or frequency domain resources of the plurality of resources are different, and the first indication information may be specifically used to activate the first resource in the plurality of resources

The network device may configure a plurality of semi-persistent resources used to carry the synchronization information, activate one of the resources, that is, the first resource, based on a demand, and notify the first terminal device. The first terminal device receives, on the activated first resource, the synchronization information from the network device, and performs the uplink signal synchronization based on the synchronization information.

For example, the first terminal device may be a terminal device in IoT, and the first terminal device cannot receive a system message in a connected state, but may receive the synchronization information on the first resource when the first terminal device is in the connected state, to maintain the uplink signal synchronization.

According to the foregoing solution, the first terminal device may request the synchronization information or obtain the synchronization information on a semi-persistent resource based on a demand. This can avoid uplink out-of-synchronization because the terminal device cannot obtain the synchronization information, and improve communication reliability.

The foregoing describes, in detail with reference to FIG. 2 to FIG. 7, the methods provided in embodiments of this application. The following describes, in detail with reference to FIG. 8 to FIG. 10, apparatuses provided in embodiments of this application. To implement functions in the methods provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 8 is a schematic block diagram of a communication apparatus according to an embodiment of this application. As shown in FIG. 8, the communication apparatus 1200 may include a transceiver unit 1220.

In a possible design, the communication apparatus 1200 may correspond to the terminal device in the foregoing method embodiments, or may be a chip disposed (or used) in the terminal device, or may be another apparatus, module, circuit, unit, or the like that can implement a method performed by the terminal device.

It should be understood that the communication apparatus 1200 may correspond to the terminal device in the method 300 and the method 600 in embodiments of this application. The communication apparatus 1200 may include units configured to perform the methods performed by the terminal device in the method 300 and the method 600 in FIG. 3 to FIG. 7 and FIG. 10. In addition, the units in the communication apparatus 1200 and the foregoing other operations and/or functions are respectively used to implement corresponding processes of the method 300 and the method 600 in FIG. 3 and FIG. 7.

Optionally, the communication apparatus 1200 may further include a processing unit 1210. The processing unit 1210 may be configured to process instructions or data, to implement a corresponding operation.

It should be further understood that when the communication apparatus 1200 is the chip disposed (or used) in the terminal device, the transceiver unit 1220 in the communication apparatus 1200 may be an input/output interface or circuit in the chip, and the processing unit 1210 in the communication apparatus 1200 may be a processor in the chip.

Optionally, the communication apparatus 1200 may further include a storage unit 1230. The storage unit 1230 may be configured to store instructions or data. The processing unit 1210 may execute the instructions or the data stored in the storage unit, to enable the communication apparatus to implement a corresponding operation.

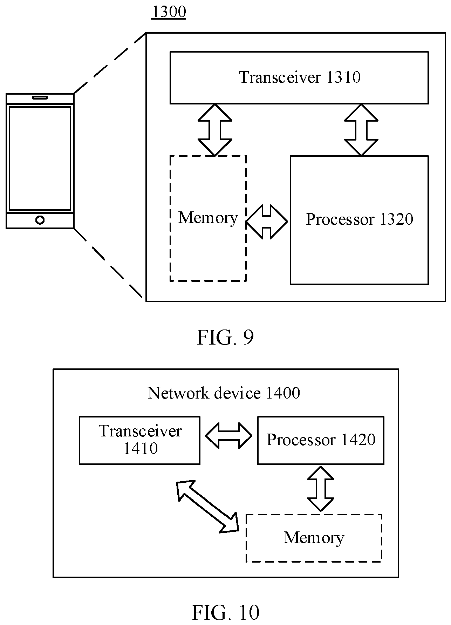

It should be understood that the transceiver unit 1220 in the communication apparatus 1200 may be implemented through a communication interface (for example, a transceiver or an input/output interface), for example, may correspond to a transceiver 1310 in a terminal device 1300 shown in FIG. 9. The processing unit 1210 in the communication apparatus 1200 may be implemented through at least one processor, for example, may correspond to a processor 1320 in the terminal device 1300 shown in FIG. 9. Alternatively, the processing unit 1210 in the communication apparatus 1200 may be implemented through at least one logic circuit. The storage unit 1230 in the communication apparatus 1200 may correspond to a memory in the terminal device 1300 shown in FIG. 9.

It should be further understood that a specific process in which the units perform the foregoing corresponding steps is described in detail in the foregoing method embodiments, and for brevity, details are not described herein.

In another possible design, the communication apparatus 1200 may correspond to the network device in the foregoing method embodiments, or may be a chip disposed (or used) in the network device, or may be another apparatus, module, circuit, unit, or the like that can implement a method performed by the network device.

It should be understood that the communication apparatus 1200 may correspond to the network device in the method 300 and the method 600 in embodiments of this application. The communication apparatus 1200 may include units configured to perform the method performed by the network device in the method 300 and the method 600 in FIG. 3 and FIG. 7. In addition, the units in the communication apparatus 1200 and the foregoing other operations and/or functions are respectively used to implement corresponding processes of the method 300 and the method 600 in FIG. 3 and FIG. 7.

Optionally, the communication apparatus 1200 may further include a processing unit 1210. The processing unit 1210 may be configured to process instructions or data, to implement a corresponding operation.

It should be further understood that when the communication apparatus 1200 is the chip disposed (or used) in the network device, the transceiver unit 1220 in the communication apparatus 1200 may be an input/output interface or circuit in the chip, and the processing unit 1210 in the communication apparatus 1200 may be a processor in the chip.

Optionally, the communication apparatus 1200 may further include a storage unit 1230. The storage unit 1230 may be configured to store instructions or data. The processing unit 1210 may execute the instructions or the data stored in the storage unit, to enable the communication apparatus to implement a corresponding operation.

It should be understood that when the communication apparatus 1200 is a network device, the transceiver unit 1220 in the communication apparatus 1200 may be implemented through a communication interface (for example, a transceiver or an input/output interface), for example, may correspond to a transceiver 1410 in a network device 1400 shown in FIG. 10. The processing unit 1210 in the communication apparatus 1200 may be implemented through at least one processor, for example, may correspond to a processor 1420 in the network device 1400 shown in FIG. 10. The processing unit 1210 in the communication apparatus 1200 may be implemented through at least one logic circuit.

It should be further understood that a specific process in which the units perform the foregoing corresponding steps is described in detail in the foregoing method embodiments, and for brevity, details are not described herein.

FIG. 9 is a schematic structural diagram of a terminal device 1300 according to an embodiment of this application. The terminal device 1300 may be used in the system shown in FIG. 1, to perform functions of the terminal device in the foregoing method embodiments. As shown in the figure, the terminal device 1300 includes a processor 1320 and a transceiver 1310. Optionally, the terminal device 1300 further includes a memory. The processor 1320, the transceiver 1310, and the memory may communicate with each other through an internal connection path, to transfer a control signal and/or a data signal. The memory is configured to store a computer program, and the processor 1320 is configured to execute the computer program in the memory, to control the transceiver 1310 to receive and send a signal.

The processor 1320 and the memory may be integrated into one processing apparatus. The processor 1320 is configured to execute program code stored in the memory to implement the foregoing functions. During specific implementation, the memory may alternatively be integrated into the processor 1320, or may be independent of the processor 1320. The processor 1320 may be corresponding to the processing unit in FIG. 8.

The transceiver 1310 may correspond to the transceiver unit in FIG. 8. The transceiver 1310 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 1300 shown in FIG. 9 can implement the processes related to the terminal device in the method embodiments shown in FIG. 3 and FIG. 7. The operations and/or the functions of the modules in the terminal device 1300 are respectively intended to implement corresponding processes in the foregoing method embodiments. For details, refer to the descriptions in the foregoing method embodiments. To avoid repetition, detailed descriptions are properly omitted herein.

The processor 1320 may be configured to perform an action that is implemented inside the terminal device and that is described in the foregoing method embodiments. The transceiver 1310 may be configured to perform a sending action by the terminal device for the network device or a receiving operation from the network device in the foregoing method embodiments. For details, refer to the descriptions in the foregoing method embodiments. Details are not described herein again.

Optionally, the terminal device 1300 may further include a power supply, configured to supply power to various components or circuits in the terminal device.

In addition, to make functions of the terminal device more perfect, the terminal device 1300 may further include an input/output apparatus, for example, include one or more of an input unit, a display unit, an audio circuit, a camera, a sensor, and the like, and the audio circuit may further include a speaker, a microphone, and the like.

FIG. 10 is a schematic structural diagram of a network device according to an embodiment of this application. The network device 1400 may be applied to the system shown in FIG. 1, to perform functions of the network device in the foregoing method embodiments. As shown in FIG. 10, the network device 1400 includes a processor 1420 and a transceiver 1410. Optionally, the network device 1400 further includes a memory. The processor 1420, the transceiver 1410, and the memory may communicate with each other through an internal connection path, to transfer a control signal and/or a data signal. The memory is configured to store a computer program, and the processor 1420 is configured to execute the computer program in the memory, to control the transceiver 1410 to receive and send a signal.

The processor 1420 and the memory may be integrated into one processing apparatus. The processor 1420 is configured to execute the program code stored in the memory to implement the foregoing functions. During specific implementation, the memory may alternatively be integrated into the processor 1320, or may be independent of the processor 1420. The processor 1420 may correspond to the processing unit in FIG. 8.

The transceiver 1410 may correspond to the transceiver unit in FIG. 8. The transceiver 1410 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network device 1400 shown in FIG. 10 can implement processes of the network device in the method embodiments shown in FIG. 3 and FIG. 7. The operations and/or the functions of the modules in the network device 1400 are respectively intended to implement corresponding processes in the foregoing method embodiments. For details, refer to the descriptions in the foregoing method embodiments. To avoid repetition, detailed descriptions are properly omitted herein.

The processor 1420 may be configured to perform an action that is implemented inside the network device and that is described in the foregoing method embodiments, and the transceiver 1410 may be configured to perform an action of receiving or sending that is performed by the network device from or to the terminal device and that is described in the foregoing method embodiments. For details, refer to the descriptions in the foregoing method embodiments. Details are not described herein again.

An embodiment of this application further provides a processing apparatus, including a processor and a (communication) interface. The processor is configured to perform the method in any one of the foregoing method embodiments. It should be understood that the processing apparatus may be one or more chips.

According to the method provided in embodiments of this application, this application further provides a computer program product. The computer program product includes computer program code. When the computer program code is executed by one or more processors, an apparatus including the processor is enabled to perform the methods in the embodiments shown in FIG. 3 and FIG. 7.

All or a part of the technical solutions provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the processes or functions according to the embodiments of the present invention are all or partially generated. The computer may be a general-purpose computer, a dedicated computer, a computer network, a network device, a terminal device, a core network device, a machine learning device, or another programmable apparatus. The computer instruction may be stored in a computer-readable storage medium, or may be transmitted from one computer-readable storage medium to another computer-readable storage medium.

According to the method provided in embodiments of this application, this application further provides a computer-readable storage medium. The computer-readable storage medium stores program code. When the program code is run by one or more processors, an apparatus including the processor is enabled to perform the methods in the embodiments shown in FIG. 3 and FIG. 7.

According to the methods provided in embodiments of this application, this application further provides a system, including the foregoing one or more network devices. The system may further include the foregoing one or more terminal devices.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink signal synchronization method, comprising:
receiving, by a terminal device, first indication information, wherein the first indication information indicates first duration, the first duration is validity duration of synchronization information, and the synchronization information is used for uplink signal synchronization; and
performing, by the terminal device, the uplink signal synchronization based on second indication information within the first duration that is after reception of the second indication information, wherein the uplink signal synchronization comprises time domain offset compensation and/or frequency domain offset compensation, and the second indication information indicates the synchronization information.

2. The method according to claim 1, wherein the synchronization information comprises one or more of the following information:
time domain offset compensation information between a serving satellite of the terminal device and a reference point, change information of the time domain offset compensation information, ephemeris information of the serving satellite of the terminal device, positioning information, frequency domain offset compensation information, location information of the reference point, or location information or timing information of a network device.

3. The method according to claim 2, wherein the method further comprises:
sending, by the terminal device, third indication information, wherein the third indication information indicates one or more of the following information:
movement speed information of the terminal device, ephemeris derivation capability information of the terminal device, or second duration, wherein the ephemeris derivation capability information comprises maximum duration of ephemeris derivation and/or an ephemeris derivation model, the ephemeris derivation model is used to determine the maximum duration of the ephemeris derivation performed by the terminal device, and the second duration is the validity duration of the synchronization information determined by the terminal device.

4. The method according to claim 3, wherein the third indication information is carried in a message 3 of a random access procedure.

5. The method according to any one of claims 1 to 4, wherein the method further comprises:
after the first duration that elapses after the reception of the second indication information, receiving, by the terminal device, fourth indication information on a first resource, wherein the fourth indication information is used to update the synchronization information, and the first resource is used to carry the fourth indication information.

6. The method according to claim 5, wherein the terminal device is in a network-connected state, and the method further comprises:
entering an idle state if receiving no fourth indication information on the first resource; and
receiving, by the terminal device, a system message, wherein the system message comprises the synchronization information.

7. The method according to claim 6, wherein the entering an idle state comprises:
determining that a quantity of transmissions of the fourth indication information is greater than or equal to a maximum quantity of transmissions, and that the fourth indication information fails to be received; and
entering the idle state.

8. The method according to claim 6 or 7, wherein the entering an idle state comprises:
determining that uplink signal out-of-synchronization or a wireless link failure occurs; and
entering the idle state.

9. The method according to claim 5, wherein the method further comprises:
initiating, by the terminal device, the random access procedure if receiving no fourth indication information on the first resource.

10. The method according to claim 9, wherein the terminal device is in a network-connected state, and the initiating, by the terminal device, the random access procedure comprises:
initiating, by the terminal device, a contention-based random access procedure after entering an idle state.

11. The method according to claim 9, wherein the initiating, by the terminal device, the random access procedure comprises:
receiving, by the terminal device, fifth indication information, wherein the fifth indication information indicates the terminal device to initiate a non-contention-based random access procedure; and
initiating, by the terminal device, the non-contention-based random access procedure based on the fifth indication information.

12. The method according to claim 9 or 10, wherein the initiating, by the terminal device, the random access procedure comprises:
initiating, by the terminal device, the random access procedure when a quantity of retransmissions of the fourth indication information is greater than or equal to a maximum quantity of retransmissions.

13. The method according to any one of claims 9 to 12, wherein the initiating the random access procedure comprises:
determining that uplink signal out-of-synchronization or a wireless link failure occurs; and
initiating the random access procedure.

14. The method according to any one of claims 5 to 13, wherein the method further comprises:
if receiving the fourth indication information, performing, by the terminal device, the uplink signal synchronization based on the fourth indication information within the first duration that is after the reception of the fourth indication information.

15. The method according to any one of claims 1 to 14, wherein the synchronization information comprises one or more of the following: the time domain offset compensation information between the reference point and the serving satellite, the change information of the time domain offset compensation information, or the ephemeris information of the serving satellite, and the method further comprises:
receiving, by the terminal device, sixth indication information, wherein the sixth indication information indicates third duration, and the third duration is validity duration of location information of the terminal device;
after the third duration that elapses after the location information is updated, receiving, by the terminal device, the positioning information; and
initiating, by the terminal device, the random access procedure if receiving, after the third duration, no positioning information on a resource for carrying the positioning information.

16. The method according to claim 15, wherein the synchronization information comprises the time domain offset compensation information between the reference point and the serving satellite and/or the change information of the time domain offset compensation information, and the method further comprises:
receiving seventh indication information, wherein the seventh indication information indicates fourth duration, and the fourth duration is validity duration of the ephemeris information of the serving satellite;
receiving, by the terminal device, the updated ephemeris information after receiving the fourth duration of the ephemeris information; and
initiating, by the terminal device, the random access procedure if receiving, after the fourth duration, no updated ephemeris information on a resource for carrying the updated ephemeris information.

17. A time synchronization method, comprising:
sending, by a network device, first indication information to a first terminal device, wherein the first indication information indicates first duration, the first duration is validity duration of synchronization information, and the synchronization information is used for uplink signal synchronization; and
sending, by the network device, second indication information to the first terminal device, wherein the second indication information indicates the synchronization information.

18. The method according to claim 17, wherein the synchronization information comprises one or more of the following information:
time domain offset compensation information between a serving satellite and a reference point, change information of the time domain offset compensation information, ephemeris information of the serving satellite of the terminal device, positioning information, frequency domain offset compensation information, location information of the reference point, or location information or timing information of the network device.

19. The method according to claim 17 or 18, wherein the method further comprises:
determining, by the network device, that the validity duration of the synchronization information is the first duration based on a location relationship between the serving satellite and the reference point and/or a location relationship between the serving satellite and the network device.

20. The method according to any one of claims 17 to 19, wherein the method further comprises:
determining, by the network device, the first duration based on ephemeris derivation capability information of the first terminal device and/or movement speed information of the first terminal device; or
determining, by the network device, the first duration based on a minimum ephemeris derivation capability of the terminal device and/or maximum movement speed information of the terminal device, wherein
the ephemeris derivation capability information comprises maximum duration of ephemeris derivation and/or an ephemeris derivation model, and the ephemeris derivation model is used to determine the maximum duration of the ephemeris derivation performed by the terminal device.

21. The method according to claim 20, wherein the method further comprises:
receiving, by the network device, third indication information from the first terminal device, wherein the third indication information indicates one or more of the following information:
the movement speed information of the terminal device, the ephemeris derivation capability information of the terminal device, or second duration, wherein
the ephemeris derivation capability information comprises the maximum duration of the ephemeris derivation and/or the ephemeris derivation model, the ephemeris derivation model is used to determine the maximum duration of the ephemeris derivation performed by the terminal device, and the second duration is the validity duration of the synchronization information determined by the terminal device.

22. The method according to claim 21, wherein the third indication information is carried in a message 3 of a random access procedure.

23. The method according to any one of claims 17 to 22, wherein the method further comprises:
the first duration after the sending of the second indication information, sending, by the network device, fourth indication information, wherein the fourth indication information is used to update the synchronization information.

24. The method according to any one of claims 17 to 23, wherein the method further comprises:
determining, by the network device based on the first duration, a cycle of a discontinuous reception operation of the first terminal device and/or activation time of the discontinuous reception operation; and
sending, by the network device, configuration information to the first terminal device, wherein the configuration information is used to configure the discontinuous reception operation, and the configuration information comprises indication information indicating the cycle and/or the activation time.

25. The method according to claim 24, wherein the discontinuous reception operation is a discontinuous reception operation performed when the terminal device is in a connected state.

26. The method according to any one of claims 17 to 25, wherein the synchronization information comprises one or more of the following: the time domain offset compensation information between the serving satellite and the reference point, the change information of the time domain offset compensation information, and the ephemeris information of the serving satellite, and the method further comprises:
sending, by the network device, sixth indication information to the first terminal device, wherein the sixth indication information indicates third duration, and the third duration is validity duration of location information of the first terminal device.

27. The method according to claim 26, wherein the method further comprises:
determining the third duration based on a movement speed of the first terminal device or a maximum movement speed of the terminal device.

28. The method according to claim 26 or 27, wherein the synchronization information comprises the time domain offset compensation information between the reference point and the serving satellite and/or the change information of the time domain offset compensation information, and the method further comprises:
sending seventh indication information to the first terminal device, wherein the seventh indication information indicates fourth duration, and the fourth duration is validity duration of the ephemeris information of the serving satellite.

29. A communication apparatus, comprising a processing unit and a transceiver unit, wherein
the transceiver unit is configured to receive and send information under control of the processing unit; and the processing unit is configured to read code instructions and perform the method according to any one of claims 1 to 28.

30. A communication apparatus, comprising at least one processor coupled to a memory, wherein
the memory is configured to store a program or instructions; and
the at least one processor is configured to execute the program or the instructions, so that the apparatus implements the method according to any one of claims 1 to 28.

31. A communication system, comprising at least one network device and at least one terminal device, wherein the at least one terminal device is configured to perform the method according to any one of claims 1 to 16, and the at least one network device is configured to perform the method according to any one of claims 17 to 28.
